# EUROPÄISCHE PATENTSCHRIFT

(11) **EP 2 953 822 B1**
(45) Veröffentlichungstag und Bekanntmachung des Hinweises auf die Patenterteilung: **20.12.2017**
(21) Anmeldenummer: 14703797.2
(22) Anmeldetag: 27.01.2014
(51) Int. Cl.: B60R 22/44

(54) **SICHERHEITSGURTAUFROLLER MIT EINER 2-FEDERKOMFORTFUNKTION**
SAFETY BELT RETRACTOR WITH A TWO-SPRING COMFORT FUNCTION
ENROULEUR DE CEINTURE DE SÉCURITÉ AVEC FONCTION CONFORT À 2 RESSORTS

(30) Priorität: 05.02.2013 DE 102013201849
(43) Veröffentlichungstag der Anmeldung: 16.12.2015
(73) Patentinhaber: Autoliv Development AB, 447 83 Vårgårda (SE)
(72) Erfinder: JABUSCH, Ronald, 25336 Elmshorn (DE)
(74) Vertreter: Müller Verweyen
(86) Internationale Anmeldenummer: PCT/EP2014/051490
(87) Internationale Veröffentlichungsnummer: WO 2014/122039

(56) Entgegenhaltungen:
- FR-A1- 2 478 471
- GB-A- 2 232 062
- US-A- 4 215 830
- US-A- 4 913 372

## Beschreibung

Die Erfindung betrifft einen Sicherheitsgurtaufroller mit einer 2-Federkomfortfunktion mit den Merkmalen des Oberbegriffs von Anspruch 1.

Sicherheitsgurtaufroller mit einer 2-Federkomfortfunktion sind grundsätzlich aus den Druckschriften DE 43 15 886 A1, DE 196 11 748 C2, DE 199 52 371 C1, DE 101 62 374 C1 und DE 103 38 865 A1 bekannt und dienen dazu, den Sicherheitsgurtgurt beim Ablegen mit einer höheren Federkraft aufzuwickeln als während des Anlegezustandes, damit der Insasse durch die verminderte Rückzugskraft des Sicherheitsgurtes im angelegten Zustand ein erhöhtes Komfortgefühl vermittelt bekommt. Die unterschiedliche, auf den Sicherheitsgurt wirkende Rückzugskraft wird bei den dortigen Lösungen durch zwei Rückzugsfedern mit einer unterschiedlichen Federkraft verwirklicht. Die stärkere Rückzugsfeder, auch als Aufrollfeder bezeichnet, ist mit ihrem äußeren Ende gehäusefest eingespannt und mit ihrem inneren Ende an einem Klinkenrad befestigt. Die schwächere Rückzugsfeder, auch als Komfortfeder bezeichnet, ist mit ihrem äußeren Ende an dem Klinkenrad und mit ihrem inneren Ende an einer drehfest mit der Gurtwelle verbundenen Mitnahmehülse gehalten. Die Rückzugsfedern sind damit in Reihe geschaltet. Grundsätzlich wirkt in diesem Fall die Aufrollfeder über das Klinkenrad und die auf Block gewickelte Komfortfeder auf die Gurtwelle. Die Komfortfeder wirkt nur dann, wenn das Klinkenrad gehäusefest festgelegt wird, so dass das Klinkenrad in diesem Fall als gehäusefeste Abstützung für die Komfortfeder wirkt. Die Aufrollfeder ist in diesem Fall durch die Festlegung des Klinkenrades deaktiviert. Demnach wirken, je nachdem ob das Klinkenrad festgelegt ist, entweder die Komfortfeder oder die Aufrollfeder. Die Festlegung des Klinkenrades erfolgt in Abhängigkeit von der Auszugslänge des Sicherheitsgurtes, mittels einer Blockierklinke, deren Bewegung mittels eines an der Gurtwelle angeordneten mechanischen Zählgetriebes oder eines Aktuators gesteuert wird.

Ein Nachteil dieser Lösung ist es, dass die Komfortfeder beim Umschalten, d.h. beim Lösen des Klinkenrades schlagartig auf Block gewickelt wird, wobei auf die Komfortfeder und auf das Klinkenrad insbesondere bei dem schlagartigen Abbremsen in die Blockstellung relativ hohe Kräfte wirken. Zur Verringerung der beim Umschalten auf die Komfortfeder wirkenden Kräfte wurde z.B. in der DE 196 11 748 C2 vorgeschlagen, zwischen dem Klinkenrad und dem daran gehaltenen Ende der Komfortfeder ein zusätzliches Federelement vorzusehen. Die US4215830 offenbart einen Sicherheitsgurtaufroller gemäß dem Oberbegriff des Anspruchs 1. Vor diesem Hintergrund liegt der Erfindung die Aufgabe zugrunde, einen Sicherheitsgurtaufroller mit einer verbesserten 2-Federkomfortfunktion zu schaffen.

Zur Lösung der Aufgabe wird erfindungsgemäß ein Sicherheitsgurtaufroller mit den Merkmalen des Anspruchs 1 vorgeschlagen. Weitere bevorzugte Weiterentwicklungen sind den Unteransprüchen, der Beschreibung und den zugehörigen Figuren zu entnehmen.

Durch die vorgeschlagene Lösung muss während des Umschaltvorganges keine der beiden Rückzugsfedern mehr auf Block gezogen werden, da jede der Rückzugsfedern unabhängig von der jeweils anderen Rückzugsfeder zwischen der Gurtwelle und dem Gehäuse wirkt. Dadurch können die im Stand der Technik bekannten Probleme erst gar nicht auftreten, und außerdem ist die Funktionsfähigkeit der Rückzugsfedern nicht von der Funktionsfähigkeit der jeweils anderen Rückzugsfeder abhängig. Außerdem kann eine der Rückzugsfedern praktisch dauernd zwischen der Gurtwelle und dem Gehäuse wirken, so dass diese eine Art Grundrückzugskraft bereitstellt, während die Erhöhung der Rückzugskraft zum Einziehen des Sicherheitsgurtes in die Parkposition durch das Zuschalten der jeweils anderen Rückzugsfeder bewirkt wird. Da die Rückzugsfedern parallel wirken, addieren sich die Federkräfte, und es muss keine der Rückzugsfedern zum Aufbringen der gesamten Rückzugskraft ausgelegt werden, welche zum Aufwickeln des Sicherheitsgurtes in die Parkposition erforderlich ist. Dabei kann die Federkennlinie durch das Vorsehen mehrerer Rückzugsfedern und das wahlweise Verbinden der Enden der Rückzugsfedern entweder mit der Gurtwelle oder mit dem Gehäuse über die Schalteinrichtung mit einfachen konstruktiven Mitteln sehr einfach an einen vorgegebenen Kennlinienverlauf angepasst werden. Gemäß der Erfindung wird definiert, dass eines der Enden der Rückzugsfedern an einem Kupplungsteil gehalten ist, an dem ein bewegliches Blockierteil vorgesehen ist, welches das Kupplungsteil in einer Stellung mit der Gurtwelle verbindet, und dass die Bewegung des Blockierteils durch die Schalteinrichtung steuerbar ist. Das Kupplungsteil und das Blockierteil dienen dazu, das Ende der Rückzugsfeder mit der Gurtwelle oder dem Gehäuse zu verbinden, wobei das Kupplungsteil der Halterung des Endes der Rückzugsfeder und das Blockierteil zur Herstellung der Verbindung des Kupplungsteils mit der Gurtwelle oder dem Gehäuse dient.

Ferner wird vorgeschlagen, dass eine drehfest mit der Gurtwelle verbundene Mitnahmehülse vorgesehen ist, an der ein zweites Ende einer der Rückzugsfedern drehfest gehalten ist, und in welche das Blockierteil in der das Kupplungsteil mit der Gurtwelle verbindenden Stellung entgegen der Auszugsrichtung des Sicherheitsgurtes blockierend eingreift. Die Mitnahmehülse wird damit zu einer Verbindung der beiden Enden der Rückzugsfedern mit der Gurtwelle genutzt.

Weiter wird gemäß der Erfindung definiert, dass die Schalteinrichtung ein linear verschiebliches Schaltteil zur Steuerung der Bewegung des Blockierteils umfasst, und dass die Bewegung des Schaltteils durch die Schalteinrichtung in Abhängigkeit von der Auszugslänge des Sicherheitsgurtes gesteuert wird.

Ferner wird gemäß der Erfindung definiert, dass das Schaltteil drehfest an dem Gehäuse festgelegt ist und eine Steuerkontur aufweist, an der das Blockierteil anliegt. Das Blockierteil ist an dem Kupplungsteil angeordnet, welches in der die Kupplungsscheibe mit der Gurtwelle verbindenden Stellung zusammen mit der Kupplungsscheibe die Drehbewegung der Gurtwelle mit ausführt. Das Schaltteil hingegen ist drehfest an dem Gehäuse festgelegt, so dass das Blockierteil gegenüber dem Schaltteil eine Relativdrehbewegung ausführt. Durch das Anliegen des Blockierteils an der Steuerkontur kann in diesem Fall sehr einfach eine Bewegung des Blockierteils erzwungen werden, welche durch die Form der Steuerkontur vorgegeben ist. Dabei kann das Schaltteil mit der Steuerkontur durch die lineare Schaltbewegung in verschiedene Stellungen gebracht werden, Zu Beginn der Auszugsbewegung kann sich das Schaltteil z.B. in einer Stellung befinden, in der das Kupplungsteil mit dem Blockierteil umlaufen kann, ohne dass das Blockierteil dabei zu einer Bewegung gezwungen wird, d.h. das Blockierteil gelangt nicht zur Anlage an der Steuerkontur oder die Steuerkontur weist einen derartigen Verlauf auf, dass das Blockierteil trotz der Anlage an der Steuerkontur nicht zu einer Bewegung gezwungen wird. Durch das Schalten des Schaltteils wird die Steuerkontur linear in eine zweite Stellung verschoben, in der das Blockierteil z.B. zu einer Schwenkbewegung gezwungen wird, durch welche die Verbindung zwischen dem Kupplungsteil und der Gurtwelle aufgehoben wird. Die umgekehrte Bewegung des Blockierteils wird dann durch ein Zurückbewegen des Schaltteils in die ursprüngliche Stellung und eine Drehung der Gurtwelle in die andere Richtung bewirkt.

Ferner wird vorgeschlagen, dass an dem Blockierteil zwei Vorsprünge vorgesehen sind, welche jeweils in Abhängigkeit von der Stellung des Schaltteils an der Steuerkontur zur Anlage gelangen, und in der Anlage an der Steuerkontur durch die Ausführung einer Relativbewegung des Blockierteils zu dem Schaltteil die Bewegung des Blockierteils steuern. Die Relativbewegung des Blockierteils wird in dem Fall der Bewegung des Blockierteils aus der das Kupplungsteil mit der Gurtwelle verbindenden in die freigebende Stellung durch die Drehbewegung der Gurtwelle zu dem Schaltteil erzwungen, da das Blockierteil in dieser Phase mit der Gurtwelle verbunden ist. Die Relativbewegung des Blockierteils zum Erzwingen der umgekehrten Bewegung wird in diesem Fall nach der Freigabe des Blockierteils durch die federkraftunterstützte Bewegung des Kupplungsteils zu dem Schaltteil bewirkt.

Dabei wird die Bewegung des Blockierteils bevorzugt derart gesteuert, dass es zur Verbindung des Kupplungsteils und/oder zum Lösen der Verbindung der Kupplungsteils mit der Gurtwelle in eine Bereitschaftsstellung bewegt wird, aus der es unterstützt durch die Federkraft der mit dem Kupplungsteil verbundenen Rückzugsfeder in eine das Kupplungsteil mit der Gurtwelle verbindende oder nicht verbindende Endstellung bewegbar ist. Die Bereitschaftsstellung kann damit als eine Art Vorposition angesehen werden, aus der das Blockierteil dann allein durch die federkraftunterstützte weitere Drehbewegung in eine Endstellung drehen kann. Eine solche Bereitschaftsstellung ist insbesondere beim Lösen der Verbindung zwischen dem Kupplungsteil und der Gurtwelle sinnvoll, da die Bewegungsrichtung des Blockierteils während dieses Bewegungsablaufes in einer Endphase zu einem sauberen Hintergreifen des Blockierteils umgekehrt werden muss.

Weiter wird vorgeschlagen, dass die Rückzugsfedern durch zwei parallel zueinander angeordnete Spiralfedern und das Kupplungsteil durch eine zwischen den Spiralfedern angeordnete Kupplungsscheibe gebildet sind. Durch die vorgeschlagene Lösung ergibt sich ein konstruktiv einfacher Aufbau und das Kupplungsteil dient außerdem aufgrund seiner Scheibenform als seitliche Anlagefläche für wenigstens eine der Rückzugsfedern.

Insbesondere kann das Blockierteil durch eine schwenkbare Blockierklinke gebildet sein. Die Blockierklinke ist dabei bevorzugt an dem Kupplungsteil gelagert.

Eine sehr kostengünstige rein mechanische Lösung der Schalteinrichtung kann dadurch verwirklicht werden, indem die Schalteinrichtung ein von der Gurtwelle angetriebenes mechanisches Zählgetriebe umfasst. Das Zählgetriebe dient hier als Einrichtung zum Erkennen einer durch die Auslegung des Zählgetriebes vorgegebenen Auszugslänge des Sicherheitsgurtes. Denkbare und bewährte Ausführungsformen der Zählgetriebe sind dabei Taumeltriebe oder Untersetzungsgetriebe mit mehreren miteinander kämmenden Zahnrädern und entsprechenden Schaltnocken oder auch eine über ein Untersetzungsgetriebe angetriebene Steuerscheibe.

Eine konstruktiv besonders einfache Ausführungsform des Zählgetriebes kann dadurch verwirklicht sein, indem das Zählgetriebe eine von der Gurtwelle über einen Exzenter angetriebene Taumelscheibe aufweist, welche durch den exzentrischen Antrieb über die Gurtwelle mit einer Verzahnung in einer gehäusefesten Verzahnung umläuft, und indem sowohl an der Taumelscheibe als auch an dem Schaltteil zwei Vorsprünge vorgesehen sind, welche jeweils in einer Stellung paarweise aneinander zur Anlage gelangen und dadurch die lineare Schaltbewegung des Schaltteils erzwingen. Das Zählgetriebe ist in diesem Fall allein durch zwei zusätzliche Teile nämlich den Exzenter und die Taumelscheibe verwirklicht, welche kostengünstig als Kunststoffspritzteile in einer Großserie herstellbar sind.

Alternativ kann die Schalteinrichtung auch einen elektrisch betätigbaren Aktuator aufweisen, welcher eine besonders genaue Steuerung der Schaltbewegung ermöglicht. Dabei kann entweder die Bewegung des Blockierteils direkt oder die Bewegung des Schaltteils gesteuert werden.

Ferner können bevorzugt identische Rückzugsfedern verwendet werden, wodurch die Herstellkosten weiter gesenkt werden können.

Weiter wird vorgeschlagen, dass die Schalteinrichtung derart angeordnet ist, dass sie wenigstens eine der durch die Rückzugsfedern aufgespannten Ebenen schneidet, wobei die Schalteinrichtung besonders bevorzugt innerhalb der innersten Windung einer der Rückzugzugsfedern angeordnet ist. Durch die vorgeschlagenen Lösungen kann der erforderliche Bauraumbedarf verringert werden und ein besonders kompakter Sicherheitsgurtaufroller geschaffen werden. Ferner ist die Schalteinrichtung dadurch bereits örtlich sehr nahe an einem der Enden der Rückzugsfeder angeordnet, so dass die Schaltbewegung sehr einfach auf dieses Ende übertragen werden kann.

Die Erfindung wird im Folgenden anhand einer bevorzugten Ausführungsform unter Bezugnahme auf die beigefügten Figuren erläutert. Dabei zeigt:
- Fig. 1:: einen Sicherheitsgurtaufroller in Schrägansicht, und
- Fig. 2:: eine Federkassette in Explosionsdarstellung, und
- Fig. 3:: eine Federkassette mit vormontierten Unterbaugruppen, und
- Fig. 4:: eine Schalteinrichtung mit einem Taumelantrieb in Seitenansicht, und
- Fig. 5:: die Schalteinrichtung mit den Einzelteilen, und
- Fig. 6 - 10:: die Schalteinrichtung in verschiedenen Stellungen während des Einzuges und des Auszuges des Sicherheitsgurtes, und
- Fig. 11:: eine Federkennlinie der erfindungsgemäßen 2-Federkomfortfunktion des Sicherheitsgurtaufrollers.

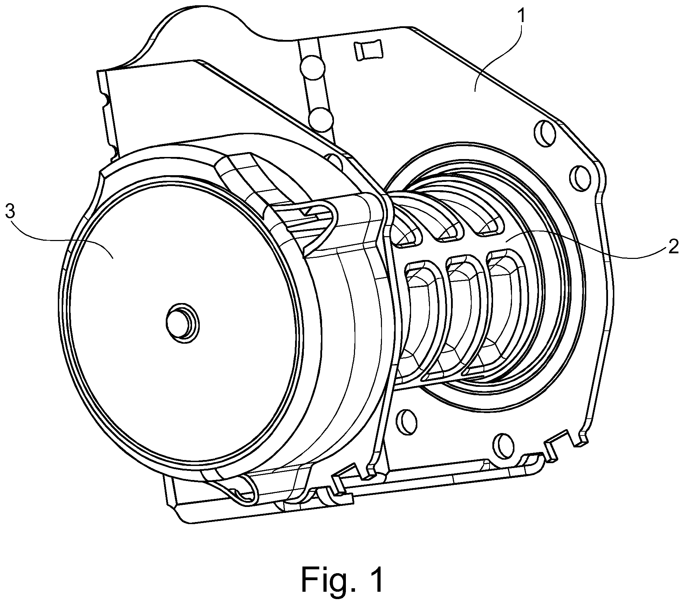

In der Figur 1 ist ein erfindungsgemäßer Sicherheitsgurtaufroller mit einer in einem Gehäuse 1 drehbar gelagerten Gurtwelle 2 zu erkennen. An dem Gehäuse 1 ist eine Federkassette 3 drehfest gehalten, in welcher die erfindungsgemäße Baugruppe der 2-Federkomfortfunktion angeordnet ist. Auf der Gurtwelle 2 ist ein nicht dargestellter Sicherheitsgurt aufwickelbar. Ferner ist die Gurtwelle 2 mittels einer Blockiereinrichtung in bekannter Weise in Abhängigkeit von der Auszugsbeschleunigung des Sicherheitsgurtes und der Fahrzeugverzögerung in Auszugsrichtung blockierbar. Sofern für die Beschreibung der Erfindung die Begriffe "axial" und "radial" verwendet werden, sind diese in Bezug zu der Drehachse der Gurtwelle 2 zu verstehen.

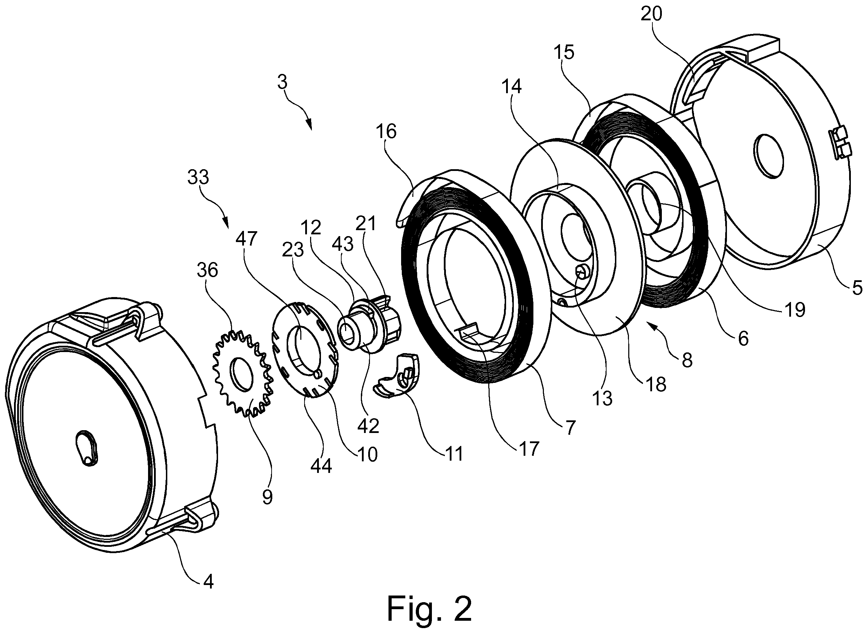

In der Figur 2 ist die Federkassette 3 mit den Einzelteilen in Explosionsdarstellung zu erkennen. Die Federkassette 3 umfasst ein Gehäuse 4, über welches sie z.B. über eine Nietverbindung mit dem Gehäuse 1 des Sicherheitsgurtaufrollers verbindbar ist. Das Gehäuse 4 ist topfförmig ausgebildet und über einen drehfest mit dem Gehäuse 4 verbindbaren Deckel 5 verschließbar. Die Federkassette 3 umfasst ferner zwei parallel angeordnete und parallel wirkende Rückzugsfedern 6 und 7 in Form von Spiralfedern, ein Kupplungsteil 8 in Form einer Kupplungsscheibe, und eine Schalteinrichtung 33.

Die Gurtwelle 2 ist mit einem nicht dargestellten Zapfen versehen, auf den eine Mitnahmehülse 12 drehfest aufgesteckt ist. Die erste Rückzugsfeder 6 ist mit ihrem ersten äußeren Ende 15 an einem Steg 20 des Deckels 5 zugfest eingehängt, und mit dem zweiten inneren Ende 19 drehfest auf einer Mitnahmekontur 21 der Mitnahmehülse 12 festgelegt, so dass die erste Rückzugsfeder 6 praktisch dauerhaft zwischen dem Deckel 5 und der Mitnahmehülse 12 wirkt. Da die Mitnahmehülse 12 drehfest mit der Gurtwelle 2, und der Deckel 5 über die drehfeste Verbindung zu dem Gehäuse 4 auch drehfest mit dem Gehäuse 1 des Sicherheitsgurtaufrollers verbunden ist, wirkt die Rückzugsfeder 6 dadurch auch zwischen der Gurtwelle 2 und dem Gehäuse 1 des Sicherheitsgurtaufrollers, so dass die Gurtwelle 2 durch die Rückzugsfeder 6 ständig in Aufwickelrichtung federbelastet ist. Damit wird der Sicherheitsgurt auch dann auf der Gurtwelle 2 aufgewickelt, wenn die zweite Rückzugsfeder 7 oder die Schalteinrichtung 33 funktionsunfähig sind. Die erste Rückzugsfeder 6 erzeugt damit eine Art Basisrückzugskraft.

Die zweite Rückzugsfeder 7 ist parallelwirkend und auch geometrisch parallel zu der ersten Rückzugsfeder 6 angeordnet und mit einem ersten äußeren Ende 16 zugfest an einem nicht dargestellten Ansatz des Gehäuses 4 gehalten. Mit dem zweiten inneren Ende 17 ist die zweite Rückzugsfeder 7 an einem Kupplungsteil 8 gehalten. Das Kupplungsteil 8 ist als Kupplungsscheibe mit einem scheibenförmigen Grundkörper 18 und einem von dem Grundkörper 18 vorstehenden Axialring 14 ausgebildet, an dem das zweite Ende 17 der zweiten Rückzugsfeder 7 eingehängt ist. Der Axialring 14 dient dabei nicht nur zur Festlegung des zweiten Endes 17 der zweiten Rückzugsfeder 7, sondern zusätzlich auch als Anlagefläche für die innerste Windung der zweiten Rückzugsfeder 7. Ferner dient der scheibenförmige Grundkörper 18 auch zu einer seitlichen Führung der zweiten Rückzugsfeder 7 und zu einer Trennung der beiden Rückzugsfedern 6 und 7. An dem Grundkörper 18 ist ferner ein axial vorstehender Lagerzapfen 13 vorgesehen, auf dem ein Blockierteil 11 in Form einer Blockierklinke schwenkbar gelagert ist.

An der Mitnahmehülse 12 ist neben der Mitnahmekontur 21 eine Blockierkontur 43 und ein Exzenter 42 vorgesehen, wobei in dem Exzenter 42 außerdem eine Lageröffnung 23 vorgesehen ist. Ferner umfasst die Schalteinrichtung 33 ein Schaltteil 10 in Form einer Schaltscheibe mit parallel zueinander ausgerichteten geraden Schlitzen 44 und einer mittigen ovalen Öffnung 47 und eine Taumelscheibe 9 mit einer äußeren Verzahnung 36.

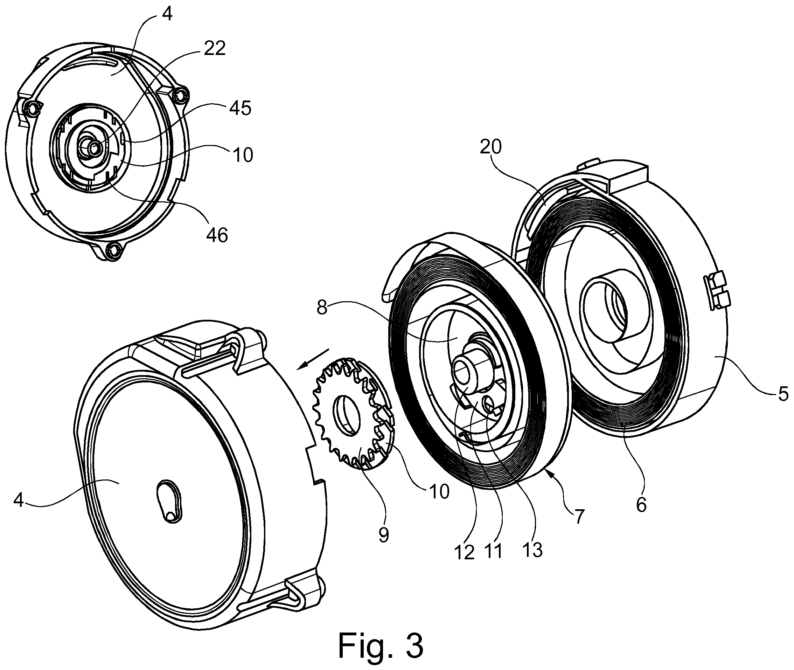

Die Montage der Federkassette 3 erfolgt dadurch, indem zuerst verschiedene in der Figur 3 zu erkennende Bauteile zu vormontierten Unterbaugruppen zusammengesetzt werden.

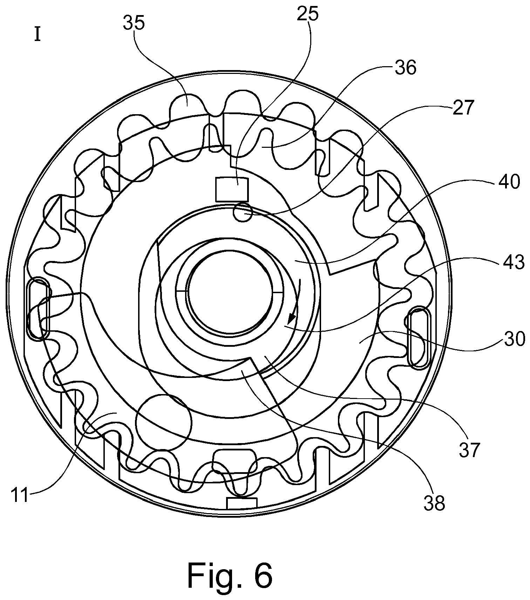

Die erste Rückzugsfeder 6 wird in den Deckel 5 eingelegt und dabei mit dem äußeren Ende 15 an dem Steg 20 des Deckels 5 befestigt. Die zweite Rückzugsfeder 7 wird auf das Kupplungsteil 8 aufgesteckt und mit dem inneren zweiten Ende 17 an dem Axialring 14 eingehängt. Außerdem wird das Blockierteil 11 auf den Lagerzapfen 13 aufgesteckt und die Mitnahmehülse 12 mit der Mitnahmekontur 21 in eine zentrische Öffnung des Kupplungsteils 8 eingeführt. Das Schaltteil 10 wird zusammen mit der Taumelscheibe 9 in das Gehäuse 4 der Federkassette 3 eingeführt. Dazu ist in dem Gehäuse 4 eine Aufnahme 45 mit einer in der Figur 6 zu erkennenden Innenverzahnung 35 und parallel zueinander ausgerichteten Stegen 46 vorgesehen, in welche die Taumelscheibe 9 zusammen mit dem Schaltteil 10 eingeführt wird. Die Taumelscheibe 9 ist dann in einer Ebene der Innenverzahnung 35 angeordnet, und die Stege 46 greifen in die Schlitze 44 ein. Das Schaltteil 10 ist kleiner als die Aufnahme 45 ausgebildet, und die Schlitze 44 sind länger als die Stege 46 ausgeführt, so dass das Schaltteil 10 in der Aufnahme 45 in Richtung der Stege 46 linear verschieblich geführt ist.

An dem Gehäuse 4 ist ein zentrischer axial gerichteter Lagerzapfen 22 vorgesehen, auf den anschließend die vormontierte Unterbaugruppe bestehend aus dem Kupplungsteil 8, der zweiten Rückzugsfeder 7 und der Mitnahmehülse 12 mit der Lageröffnung 23 aufgesteckt wird. Der Lagerzapfen 22 ist koaxial zu der Drehachse der Gurtwelle 2 angeordnet, so dass die Mitnahmehülse 12 mit der Lageröffnung 23 koaxial zu der Gurtwelle angeordnet und gelagert ist. Die Mitnahmehülse 12 ist an der dem Gehäuse 4 zugewandten Seite mit einem Exzenter 42 versehen, auf dem die Taumelscheibe 9 drehbar gelagert ist. Die Mitnahmehülse 12 ist drehfest mit der Gurtwelle 2 verbunden, so dass der Exzenter 42 während der Drehbewegung der Gurtwelle 2 umläuft und aufgrund des abschnittsweisen Eingriffs der Taumelscheibe 9 mit der Verzahnung 36 in die Verzahnung 35 der Aufnahme 45 eine gegen die Drehrichtung der Gurtwelle 2 gerichtete Taumelbewegung der Taumelscheibe 9 erzwingt, während der die Taumelscheibe 9 mit der Verzahnung 36 in der Innenverzahnung 35 der Aufnahme 45 abrollt.

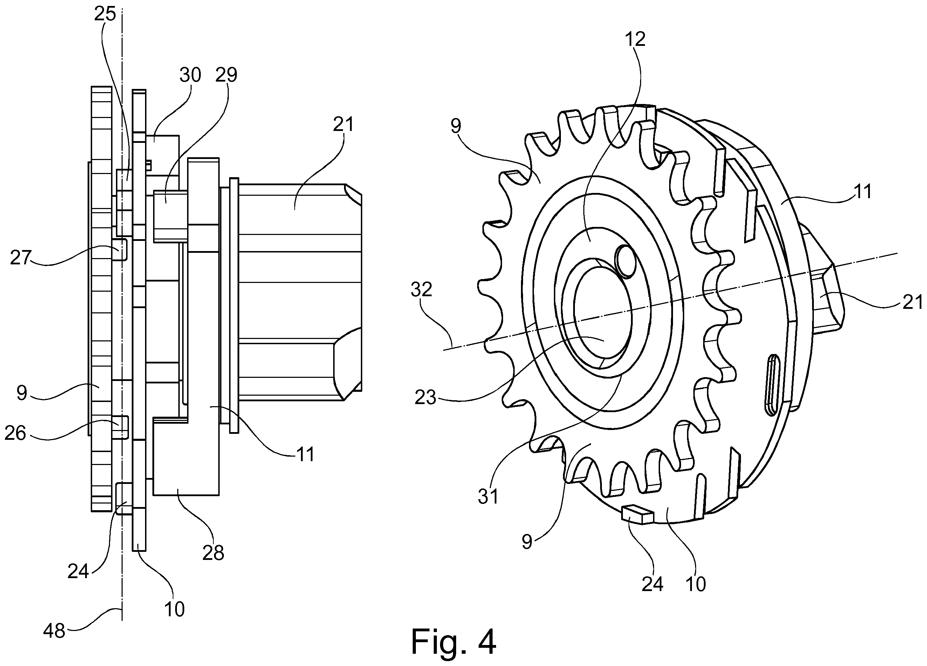

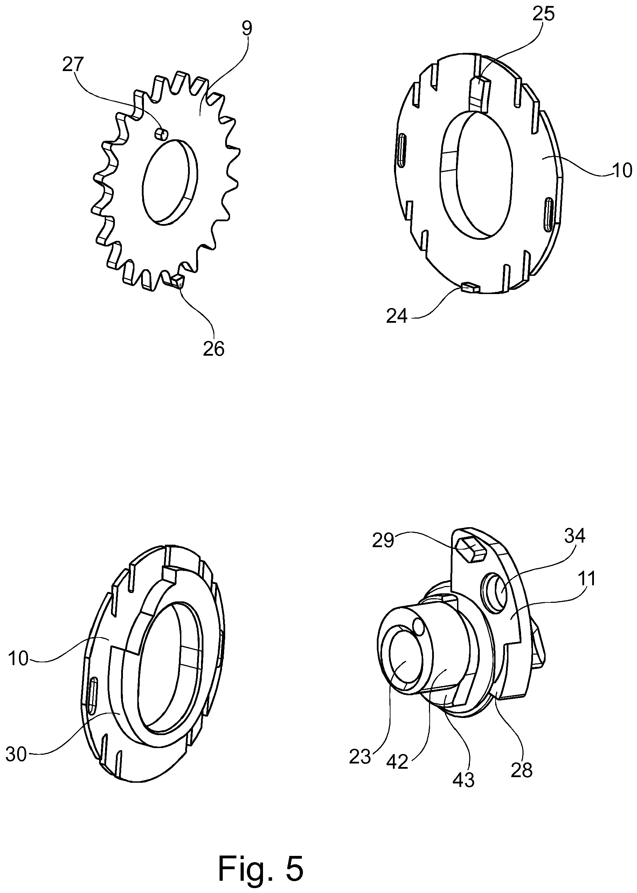

In den Figuren 4 und 5 sind die Taumelscheibe 9, das Schaltteil 10 und das Blockierteil 11 vergrößert, zusammengesetzt und als Einzelteile zu erkennen. An dem Blockierteil 11 sind zwei auf derselben Seite angeordnete, axial vorstehende Vorsprünge 28 und 29 und eine Lageröffnung 34 zur Lagerung auf dem Lagerzapfen 13 vorgesehen. Das Blockierteil 11 liegt radial innen an der Blockierkontur 43 der Mitnahmehülse 12 an, und zwar in einer derartigen Ausrichtung, dass die Vorsprünge 28 und 29 in Richtung des Exzenters 42 vorstehen. Die Taumelscheibe 9 ist zusammen mit dem Schaltteil 10 auf den Exzenter 42 aufgesteckt, wobei das Schaltteil 10 aufgrund der ovalen Öffnung 47 auf dem Exzenter 42 linear verschieblich ist. An der dem Blockierteil 11 zugewandten Seite des Schaltteils 10 ist eine Steuerkontur 30 vorgesehen, welche in der zusammengesetzten Stellung der Bauteile an der Radialaußenseite von den Vorsprüngen 28 und 29 des Blockierteils 11 überragt wird. Ferner sind sowohl an dem Schaltteil 10 als auch an der Taumelscheibe 9 an den einander zugewandten Seitenflächen jeweils zwei Vorsprünge 24 und 25 und 26 und 27 vorgesehen, welche in der Länge derart bemessen sind, dass sie in eine gemeinsame Schaltebene 48 hineinragen.

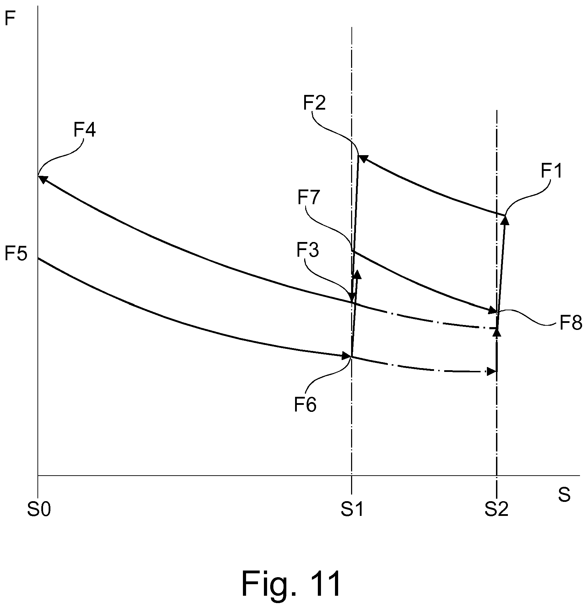

In den Figuren 6 bis 10 wird die Funktion der Schalteinrichtung 33 anhand verschiedener Stellungen der Bauteile näher erläutert, wobei die jeweils in den verschiedenen Stellungen wirkenden Federkräfte in dem in der Figur 11 dargestellten Diagramm über der Einzugslänge des Sicherheitsgurtes aufgetragen sind.

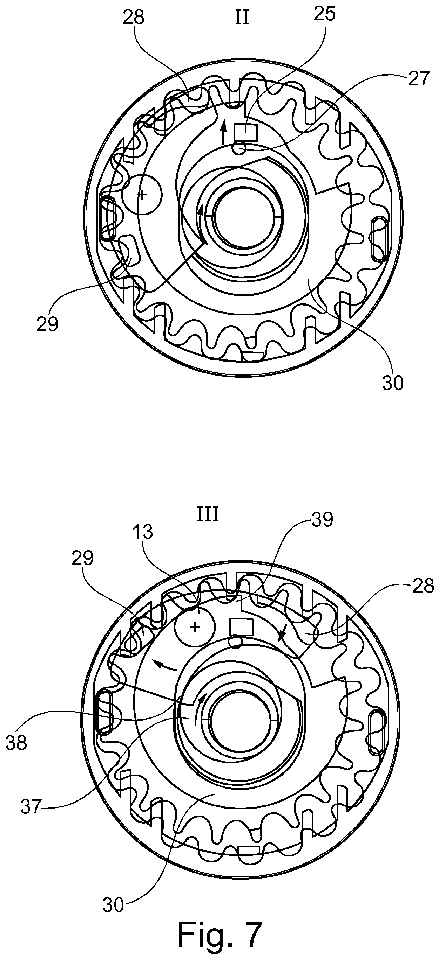

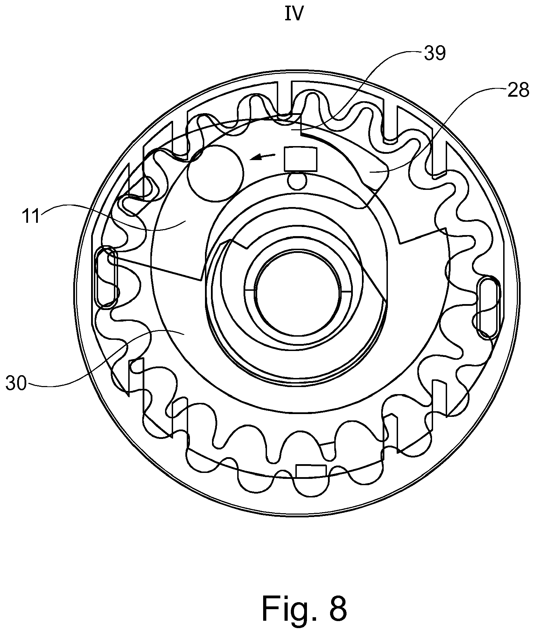

In der Figur 6 befindet sich das Blockierteil 11 in einer Stellung, in der es mit einer Blockierkante 38 an einem Blockierabsatz 37 der Blockierkontur 43 anliegt und dadurch das Kupplungsteil 8 mit der Mitnahmehülse 12 bei einer Drehrichtung der Gurtwelle 2 in der dargestellten Pfeilrichtung, welche der Auszugsrichtung des Sicherheitsgurtes entspricht, verbindet. Diese Stellung der Bauteile liegt zu Beginn der Auszugsbewegung des Sicherheitsgurtes aus der Parkposition vor, welche in dem Diagramm in Figur 11 mit S2 bezeichnet wurde. Durch die Verbindung der Mitnahmehülse 12 mit dem Kupplungsteil 8 wirken in dieser Stellung und während des Beginns der Gurtauszugsbewegung beide Rückzugsfedern 6 und 7 mit der Gesamtfederkraft auf der dargestellten Kennlinie zwischen der Kraft F1 und F2. Die Steuerkontur 30 des Schaltteiles 10 befindet sich in dieser Stellung der Bauteile in einer derartigen Position, dass das Blockierteil 11 mit den Vorsprüngen 28 und 29 umlaufen kann, ohne dass diese an der Steuerkontur 30 zur Anlage gelangen. Bei einer weiteren Drehung der Gurtwelle 2 in Auszugsrichtung gelangt der Vorsprung 27 der Taumelscheibe 9 kurz vor dem Erreichen einer Einzugslänge S1 zur Anlage an dem Vorsprung 25 des Schaltteiles 10, wodurch das Schaltteil 10 in der in der Figur 7 gezeigten Pfeilrichtung linear nach oben verschoben wird. Aufgrund der Verschiebung des Schaltteils 10 wird die Steuerkontur 30 in der Darstellung so weit nach oben verschoben, dass der Vorsprung 29 bei der weiteren Drehbewegung der Gurtwelle 2 in Gurtauszugsrichtung an der Radialaußenseite der Steuerkontur 30 zur Anlage gelangt. Dabei wird das Blockierteil 11, wie anhand der Pfeile in der rechten Darstellung der Figur 7 zu erkennen ist, zu einer Schwenkbewegung um den Lagerzapfen 13 gezwungen, bis der Vorsprung 28 in einem Abstand hinter einer Blockierkante 39 der Steuerkontur 30 zu liegen kommt. Anschließend wird das Blockierteil 11 weiter verschwenkt, bis die Blockierkante 38 den Kontakt zu dem Blockierabsatz 37 verliert und die Verbindung zwischen der Mitnahmehülse 12 und dem Kupplungsteil 8 aufgehoben ist. Nachdem die Verbindung aufgehoben wurde, kann sich das Blockierteil 11 nicht mehr an der Blockierkontur der Mitnahmehülse 12 abstützen, so dass das Blockierteil 11 aufgrund der von der zweiten Rückzugsfeder 7 ausgeübten Federkraft in die in der Figur 8 gezeigte Stellung bewegt wird, in der der Vorsprung 28 an der Blockierkante 39 anliegt. Aufgrund der aufgehobenen Verbindung wirkt die Federkraft der zweiten Rückzugsfeder 7 nicht mehr zwischen dem Gehäuse 1 und der Gurtwelle 2 des Sicherheitsgurtaufrollers und die auf die Gurtwelle 2 wirkende Gesamtfederkraft sinkt von F2 auf einen mit F3 gekennzeichneten Wert. Wichtig für die Umschaltbewegung ist dabei, dass das Blockierteil 11 zuerst mit dem Vorsprung 28 hinter die Blockierkante 39 verschwenkt wird, bevor die Blockierkante 38 den Kontakt zu dem Blockierabsatz 37 verliert. Bei einer richtigen Auslegung der Bauteile bedarf die Umsteuerung einer Drehung der Gurtwelle 2 um 20 bis 30 Grad, wobei die Einzugslänge S1 genau der Stellung der Bauteile entspricht, zu dem die Blockierkante 38 den Kontakt zu dem Blockierabsatz 37 verliert.

Die in der Figur 8 gezeigte Stellung der Bauteile liegt während des normalen Anlegezustandes des Sicherheitsgurtes vor. Es wirkt allein die Federkraft der ersten Rückzugsfeder 6 entlang der Hystereseschleife zwischen F3, F4, F5 und F6, wobei die Einzugslänge S1 den Schaltpunkt darstellt, welcher praktisch während der normalen Auszugs- und Einzugsbewegung des Sicherheitsgurtes nicht erreicht wird.

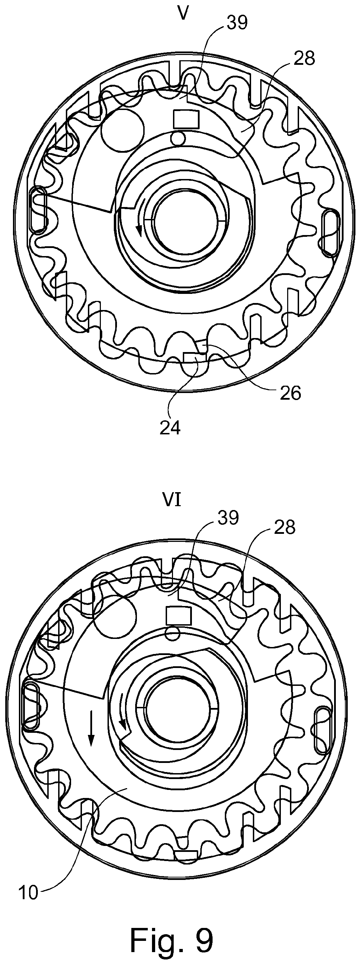

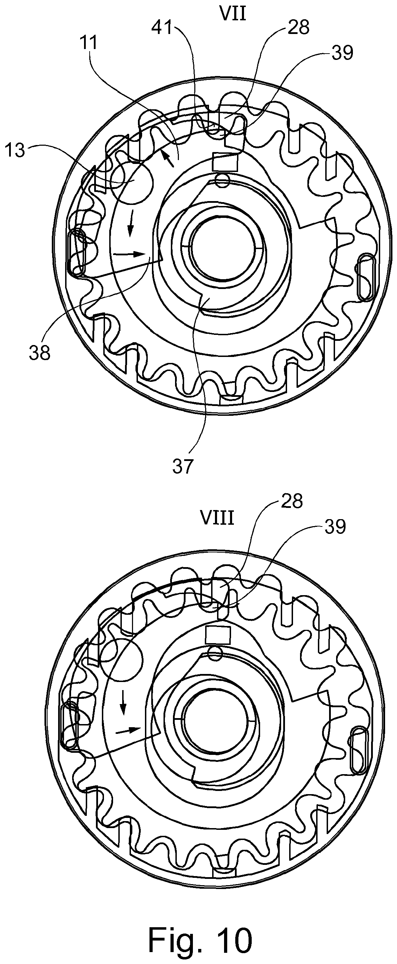

Beim Ablegen des Sicherheitsgurtes dreht die Gurtwelle 2 in der linken Darstellung der Figur 9 entgegen dem Uhrzeigersinn in Pfeilrichtung, bis der Vorsprung 26 der Taumelscheibe 9 auf den Vorsprung 24 des Schaltteils 10 trifft und das Schaltteil 10 wie in der rechten Darstellung der Figur 9 zu erkennen ist in Pfeilrichtung nach unten verschiebt. Aufgrund der Verschiebung des Schaltteils 10 gelangt die Blockierkante 39 außer Kontakt mit der Stirnfläche des Vorsprunges 28, so dass das Blockierteil 11 aufgrund der wirkenden Federkraft der zweiten Rückzugsfeder 7 gegenüber dem Schaltteil 10 entgegen dem Uhrzeigersinn verdreht wird, wie in der Figur 10 zu erkennen ist. Der Vorsprung 28 weist an seiner Radialinnenseite eine Steuerfläche 41 auf, mit welcher der Vorsprung 28 an der Blockierkante 39 abgleitet, wodurch das Blockierteil 11 während dieser Rückdrehbewegung entgegen dem Uhrzeigersinn um den Lagerzapfen 13 verschwenkt wird, bis das Blockierteil 11 schließlich wieder, wie in der Figur 6 zu erkennen ist, mit der Blockierkante 38 an dem Blockierabsatz 37 der Blockierkontur 43 der Mitnahmehülse 12 anliegt und das Kupplungsteil 8 mit der Mitnahmehülse 12 verbunden ist. Durch diesen Umschaltvorgang wird die auf die Gurtwelle 2 wirkende Gesamtfederkraft von der Federkraft F6 auf die Federkraft F7 erhöht, und der Sicherheitsgurt wird während der weiteren Einzugsbewegung mit der erhöhten Federkraft entlang der Kurve von F7 nach F8 eingezogen.

Die Schalteinrichtung 33 ist bauraumsparend innerhalb der innersten Windung der zweiten Rückzugsfeder 7 angeordnet. Dazu wird insbesondere der durch den Axialring 14 geschaffene Freiraum genutzt, welcher dadurch geschaffen wird, indem das zweite Ende 17 radial außen an dem Axialring 14 zugfest eingehängt ist. Die zweite Rückzugsfeder 7 ist dadurch eindeutig in dem Ringraum zwischen dem Axialring 14 und der Innenwandung des Gehäuses 4 gehalten, so dass der Bauraum radial innerhalb der innersten Windung bzw. innerhalb des Axialringes 14 bewusst freigehalten wird.

Die Schalteinrichtung 33 ist damit derart angeordnet, dass sie die durch die zweite Rückzugsfeder 7 aufgespannte Ebene schneidet. Abgesehen von dem Abschnitt der Mitnahmehülse 12 mit der Mitnahmekontur 21 befinden sich damit alle Bauteile innerhalb des scheibenförmigen Bauraumes, welcher durch die Breite der zweiten Rückzugsfeder 7 begrenzt ist. Damit weist die erfindungsgemäße 2-Federkomfortfunktion nur einen um die Breite der zweiten Rückzugsfeder 7 vergrößerten Bauraumbedarf auf.

## Patentansprüche

1. Sicherheitsgurtaufroller mit einer 2-Federkomfortfunktion umfassend:
- eine in einem Gehäuse (1) drehbar gelagerte Gurtwelle (2), auf der ein Sicherheitsgurt aufwickelbar ist, und
- wenigstens zwei zwischen dem Gehäuse (1) und der Gurtwelle (2) wirkende, in Aufwickelrichtung des Sicherheitsgurtes federvorgespannte Rückzugsfedern (6,7), wobei
- die Rückzugsfedern (6,7) parallelwirkend zwischen der Gurtwelle (2) und dem Gehäuse (1) angeordnet sind,
- wenigstens eine der Rückzugsfedern (6,7) über eine in Abhängigkeit von der Auszugslänge des Sicherheitsgurtes schaltende Schalteinrichtung (33) mit einem Ende (15,16,17,19) mit der Gurtwelle (2) oder dem Gehäuse (1) verbindbar ist,
- eines der Enden (15,16,17,19) der Rückzugsfeder (6,7) an einem Kupplungsteil (8) gehalten ist, an dem ein bewegliches Blockierteil (11) vorgesehen ist, welches das Kupplungsteil (8) in einer Stellung mit der Gurtwelle (2) verbindet, und
- die Bewegung des Blockierteils (11) durch die Schalteinrichtung steuerbar ist,
**dadurch gekennzeichnet, dass**
- die Schalteinrichtung (33) ein linear verschiebliches Schaltteil (10) zur Steuerung der Bewegung des Blockierteils (11) umfasst, dass die Bewegung des Schaltteils (10) durch die Schalteinrichtung (33) in Abhängigkeit von der Auszugslänge des Sicherheitsgurtes gesteuert wird, und
- dass das Schaltteil (10) drehfest gegenüber dem Gehäuse (1) festgelegt ist und eine Steuerkontur (30) aufweist, an der das Blockierteil (11) anliegt.

2. Sicherheitsgurtaufroller nach Anspruch 1, **dadurch gekennzeichnet, dass**
- eine drehfest mit der Gurtwelle (2) verbundene Mitnahmehülse (12) vorgesehen ist, an der ein Ende (15,16,17,19) einer der Rückzugsfedern (6,7) drehfest gehalten ist, und in welche das Blockierteil (11) in der das Kupplungsteil (8) mit der Gurtwelle (2) verbindenden Stellung entgegen der Auszugsrichtung des Sicherheitsgurtes blockierend eingreift.

3. Sicherheitsgurtaufroller nach Anspruch 1, **dadurch gekennzeichnet, dass**
- an dem Blockierteil (11) zwei Vorsprünge (28,29) vorgesehen sind, welche jeweils in Abhängigkeit von der Stellung des Schaltteils (10) an der Steuerkontur (30) zur Anlage gelangen, und in der Anlage an der Steuerkontur (30) während der Ausführung einer Relativbewegung des Blockierteils (11) zu dem Schaltteil (10) die Bewegung des Blockierteils (11) steuern.

4. Sicherheitsgurtaufroller nach einem der Ansprüche 1 bis 3, **dadurch gekennzeichnet, dass**
- die Bewegung des Blockierteils (11) derart gesteuert ist, dass es zur Verbindung des Kupplungsteils (8) und/oder zum Lösen der Verbindung der Kupplungsteils (8) mit der Gurtwelle (2) in eine Bereitschaftsstellung bewegt wird, aus der es unterstützt durch die Federkraft der mit dem Kupplungsteil (8) verbundenen Rückzugsfeder (7) in eine das Kupplungsteil (8) mit der Gurtwelle (2) verbindende oder nicht verbindende Endstellung bewegbar ist.

5. Sicherheitsgurtaufroller nach einem der Ansprüche 1 bis 4, **dadurch gekennzeichnet, dass**
- die Rückzugsfedern (6,7) durch zwei parallel zueinander angeordnete Spiralfedern und das Kupplungsteil (8) durch eine zwischen den Spiralfedern angeordnete Kupplungsscheibe gebildet sind.

6. Sicherheitsgurtaufroller nach einem der Ansprüche 1 bis 5, **dadurch gekennzeichnet, dass**
- das Blockierteil (11) durch eine schwenkbare Blockierklinke gebildet ist.

7. Sicherheitsgurtaufroller nach einem der vorangegangenen Ansprüche, **dadurch gekennzeichnet, dass**
- die Schalteinrichtung (33) ein von der Gurtwelle (2) angetriebenes mechanisches Zählgetriebe umfasst.

8. Sicherheitsgurtaufroller nach Anspruch 7, **dadurch gekennzeichnet, dass**
- das Zählgetriebe eine von der Gurtwelle (2) über einen Exzenter angetriebene Taumelscheibe (9) aufweist, welche durch den exzentrischen Antrieb über die Gurtwelle (2) mit einer Verzahnung (36) in einer gehäusefesten Verzahnung (35) taumelt, und
- dass sowohl an der Taumelscheibe (9) als auch an dem Schaltteil (10) zwei Vorsprünge (24,25,26,27) vorgesehen sind, welche jeweils in einer Stellung paarweise zur Anlage aneinander gelangen und dadurch die lineare Schaltbewegung des Schaltteils (10) erzwingen.

9. Sicherheitsgurtaufroller nach einem der Ansprüche 1 bis 6, **dadurch gekennzeichnet, dass**
- die Schalteinrichtung (33) einen elektrisch betätigbaren Aktuator aufweist.

10. Sicherheitsgurtaufroller nach Anspruch 9, **dadurch gekennzeichnet, dass**
- die Bewegung des Blockierteils (11) oder die Bewegung des Schaltteils (10) durch den Aktuator steuerbar ist.

11. Sicherheitsgurtaufroller nach einem der vorangegangenen Ansprüche, **dadurch gekennzeichnet, dass** die Rückzugsfedern (6,7) identisch sind.

12. Sicherheitsgurtaufroller nach einem der vorangegangenen Ansprüche, **dadurch gekennzeichnet, dass**
- die Schalteinrichtung (33) derart angeordnet ist, dass sie wenigstens eine der durch die Rückzugsfedern (6,7) aufgespannten Ebenen schneidet.

13. Sicherheitsgurtaufroller nach Anspruch 12, **dadurch gekennzeichnet, dass**
- die Schalteinrichtung (33) innerhalb der innersten Windung einer der Rückzugzugsfedern (6,7) angeordnet ist.

## Claims

1. Safety belt roller with a 2-spring comfort function comprising:
- a belt shaft (2) rotatably supported in a housing (1) and onto which a safety belt can be wound, and
- at least two retractile springs (6, 7), which act between the housing (1) and the belt shaft (2) and are spring-pre-tensioned in the winding direction of the safety belt, wherein
- the retractile springs (6, 7) are arranged acting in parallel between the belt shaft (2) and the housing (1),
- at least one of the retractile springs (6, 7) can be connected by a switching device (33) which switches depending of the withdrawal length of the safety belt by an end (15, 16, 17, 19) to the belt shaft (2) or to the housing (1),
- one of the ends (15, 16, 17, 19) of the retractile spring (6, 7) is held on a coupling part (8) on which a movable blocking part (11) is provided, which connects the coupling part (8) in a position to the belt (shaft (2), and
- the movement of the blocking part (11) can be controlled by the switching device, **characterized by that**
- the switching device (33) comprises a switching part (10) which can be linearly shifted for controlling the movement of the blocking part (11), that the movement of the switching part (10) is controlled by the switching device (33) as a function of the withdrawal length of the safety belt, and
- that the switching part (10) is fixed relative to the housing (1) in a rotation-proof manner and comprises a control contour (30) against which the blocking part (11) rests.

2. Safety belt roller according to Claim 1, **characterized by that**
- an entrainment casing (12) is provided, which is connected in a rotation-proof manner to the belt shaft (2) and on which an end (15, 16,17, 19) of one of the retractile springs (6, 7) is held in a rotation-proof manner and into which the blocking part (11) engages in a blocking manner in the position connecting the coupling part (8) to the belt shaft (2) counter to the withdrawal direction of the safety belt.

3. Safety belt roller according to Claim 1, **characterized by that**
- two projections (28, 29) are provided on the blocking part (11) which come to rest on the control contour (30) as a function of the position of the switching part, and control the movement of the blocking part (11) when resting on the control contour (30) during the execution of a relative movement of the blocking part (11) to the switching part (10).

4. Safety belt roller according to one of Claims 1 to 3, **characterized by that**
- the movement of the blocking part (11) is controlled in such a manner that it is moved into a ready position for connecting the coupling part (8) and/or for loosening the connection of the coupling part (8) to the belt shaft (2), from which it can be moved, supported by the spring power of the retractable spring (7) connected to the coupling part (8), into an end position which connects or does not connect the coupling part (8) to the belt shaft (2).

5. Safety belt roller according to one of Claims 1 to 4, **characterized by that**
- the retractile springs (6, 7) are formed by two parallel spiral springs and the coupling part (8) is formed by a coupling disk arranged between the spiral springs.

6. Safety belt roller according to one of Claims 1 to 5, **characterized by that**
- the blocking part (11) is formed by a pivotable blocking pawl.

7. Safety belt roller according to one of the previous claims, **characterized by that**
- the switching device (33) comprises a mechanical counting gear train driven by the belt shaft (2).

8. Safety belt roller according to Claim 7, **characterized by that**
- the counting gear train comprises a wobbler (9) driven by the belt shaft (2) via an eccentric and which wobbles by the eccentric drive via the belt shaft (2) with a cogging (36) in a cogging (35) fixed to the housing, and
- that two projections (24, 25, 26, 27) are provided on the wobbler (9) and also on the switching part (10) which move in pairs onto one another in a position and as a consequence bring about the linear switching movement of the switching part (10).

9. Safety belt roller according to one of Claims 1 to 6, **characterized by that**
- the switching device (33) comprises an electrically actuatable actuator.

10. Safety belt roller according to Claim 9, **characterized by that**
- the movement of the blocking part (11) or the movement of the switching part (10) can be controlled by the actuator.

11. Safety belt roller according to one of the previous claims, **characterized by that**
- the retractile springs (6, 7) are identical.

12. Safety belt roller according to one of the previous claims, **characterized by that**
- the switching device (33) is arranged in such a manner that it intersects at least one of the planes tensioned by the retractile springs (6, 7).

13. Safety belt roller according to Claim 12, **characterized by that**
- the switching device (33) is arranged inside the innermost winding of one of the retractile springs (6, 7).

## Revendications

1. Enrouleur de ceinture de sécurité doté d'une fonction de confort à deux ressorts, comprenant :
- un axe de ceinture (2) monté rotatif dans un boîtier (1), et sur lequel une ceinture de sécurité peut s'enrouler, et
- au moins deux ressorts de rappel (6, 7) agissant entre le boîtier (1) et l'axe de ceinture (2) et précontraints dans le sens de l'enroulement de la ceinture de sécurité ;
- les ressorts de rappel (6, 7) étant disposés de manière à agir parallèlement entre l'axe de ceinture (2) et le boîtier (1), et
- au moins un des ressorts de rappel (6, 7) pouvant être relié par une extrémité (15, 16, 17, 19) à l'axe de ceinture (2) ou au boîtier (1), au moyen d'une installation de couplage (33) qui effectue un couplage en fonction de la longueur de déroulement de la ceinture de sécurité,
- une des extrémités (15, 16, 17, 19) des ressorts de rappel (6, 7) étant maintenue sur une pièce d'accouplement (8) sur laquelle est prévue une pièce de blocage (11) mobile, laquelle lie la pièce d'accouplement (8) à l'axe de ceinture (2) dans une position, et
- le mouvement de la pièce de blocage (11) pouvant être commandé par l'installation de couplage,
**caractérisé en ce que**
- l'installation de couplage (33) comprend une pièce de couplage (10) pouvant être déplacée linéairement pour commander le mouvement de la pièce de blocage (11), **en ce que** le mouvement de la pièce de couplage (10) est commandé par l'installation de couplage (33) en fonction de la longueur de déroulement de la ceinture de sécurité, et
- **en ce que** la pièce de couplage (10) est fixée au boîtier (1) de manière solidaire en rotation et présente un contour de commande (30) sur lequel s'appuie la pièce de blocage (11).

2. Enrouleur de ceinture de sécurité selon la revendication 1, **caractérisé en ce que**
- il est prévu une douille d'entraînement (12) liée à l'axe de ceinture (2) de manière solidaire en rotation, sur laquelle est maintenue une extrémité (15, 16, 17, 19) d'un des ressorts de rappel (6, 7) de manière solidaire en rotation, et dans laquelle la pièce de blocage (11) s'engage pour empêcher le déroulement de la ceinture de sécurité dans la position de liaison de la pièce d'accouplement (8) et de l'axe de ceinture (2).

3. Enrouleur de ceinture de sécurité selon la revendication 1, **caractérisé en ce que**
- il est prévu deux saillies (28, 29) sur la pièce de blocage (11), qui viennent chacune s'appuyer, en fonction de la position de la pièce de couplage (10), sur le contour de commande (30) et qui, une fois en appui sur le contour de commande (30), commandent le mouvement de la pièce de blocage (11) pendant l'exécution d'un mouvement relatif de la pièce de blocage (11) par rapport à la pièce de couplage (10).

4. Enrouleur de ceinture de sécurité selon l'une des revendications 1 à 3, **caractérisé en ce que**
- le mouvement de la pièce de blocage (11) est commandé de sorte qu'elle met en liaison la pièce d'accouplement (8) et l'axe de ceinture (2) et/ou défait ladite liaison en prenant une position de disponibilité, à partir de laquelle elle peut être déplacée, sous l'effet de la force élastique du ressort de rappel (7) lié à la pièce d'accouplement (8), vers une position finale qui lie ou ne lie pas la pièce d'accouplement (8) à l'axe de ceinture (2).

5. Enrouleur de ceinture de sécurité selon l'une des revendications 1 à 4, **caractérisé en ce que**
- les ressorts de rappel (6, 7) consistent en deux ressorts en spirale disposés parallèlement et la pièce d'accouplement (8) consiste en un disque d'accouplement disposé entre les ressorts en spirale.

6. Enrouleur de ceinture de sécurité selon l'une des revendications 1 à 5, **caractérisé en ce que**
- la pièce de blocage (11) consiste en un cliquet de blocage pivotant.

7. Enrouleur de ceinture de sécurité selon l'une des revendications précédentes, **caractérisé en ce que**
- l'installation de couplage (33) comprend un compteur mécanique entraîné par l'axe de ceinture (2).

8. Enrouleur de ceinture de sécurité selon la revendication 7, **caractérisé en ce que**
- le compteur mécanique présente un disque oscillant (9) entraîné par l'axe de ceinture (2) par le biais d'un excentrique, ledit disque oscillant effectuant, sous l'action de l'entraînement excentrique par l'axe de ceinture (2), des rotations oscillatoires engageant une denture (36) dans une denture solidaire du boîtier (35), et
- **en ce qu'**il est prévu, aussi bien sur le disque oscillant (9) que sur la pièce de couplage (10), deux saillies (24, 25, 26, 27) qui, dans une position, entrent deux à deux en appui mutuel et ainsi contraignent le mouvement linéaire de couplage de la pièce de couplage (10).

9. Enrouleur de ceinture de sécurité selon l'une des revendications 1 à 6, **caractérisé en ce que**
- l'installation de couplage (33) présente un actionneur qui peut être commandé électriquement.

10. Enrouleur de ceinture de sécurité selon la revendication 9, **caractérisé en ce que**
- le mouvement de la pièce de blocage (11) ou le mouvement de la pièce de couplage (10) peut être commandé par l'actionneur.

11. Enrouleur de ceinture de sécurité selon l'une des revendications précédentes, **caractérisé en ce que** les ressorts de rappel (6, 7) sont identiques.

12. Enrouleur de ceinture de sécurité selon l'une des revendications précédentes, **caractérisé en ce que**
- l'installation de couplage (33) est disposée de manière à couper au moins un des plans définis par les ressorts de rappel (6, 7).

13. Enrouleur de ceinture de sécurité selon la revendication 12, **caractérisé en ce que**
- l'installation de couplage (33) est disposée à l'intérieur de l'enroulement le plus intérieur de l'un des ressorts de rappel (6, 7).
